# FASCICULE DE BREVET EUROPEEN

(11) **EP 2 280 596 B1**
(45) Date de publication et mention de la délivrance du brevet: **17.08.2016**
(21) Numéro de dépôt: 09738327.7
(22) Date de dépôt: 08.04.2009
(51) Int. Cl.: A01B 15/16, A01B 23/06

(54) **DISQUE A USAGE AGRICOLE, NOTAMMENT DISQUE UTILISE POUR LA REALISATION D'UN LABOUR**
SCHEIBE FÜR DEN LANDWIRTSCHAFTLICHEN GEBRAUCH, INSBESONDERE ZUR BODENBEARBEITUNG
DISK FOR FARM USE, PARTICULARLY USED FOR FIELD PLOWING

(30) Priorité: 09.04.2008 FR 0801944
(43) Date de publication de la demande: 09.02.2011
(73) Titulaire: Forges De Niaux, 09400 Niaux (FR)
(72) Inventeur: PINEDA, Laurent, F-09000 Foix (FR)
(74) Mandataire: Santarelli
(86) Numéro de dépôt international: PCT/FR2009/000413
(87) Numéro de publication internationale: WO 2009/133293

(56) Documents cités:
- GB-A- 2 155 294
- US-A- 4 305 272
- US-A- 4 729 802
- US-A1- 2006 283 609

## Description

La présente invention concerne un disque à usage agricole, notamment un disque utilisé pour la préparation du sol.

Pour la préparation du sol en limitant son érosion, il est connu d'utiliser des disques en remplacement des charrues à socs. Les disques sont montés sur un châssis destiné à venir prendre place à l'arrière d'un tracteur agricole, ou similaire. Les disques, qui peuvent être plans mais aussi présenter une concavité, sont, en position de travail, sensiblement verticaux, éventuellement inclinés, et peuvent pivoter autour d'un axe sensiblement horizontal. Plusieurs disques peuvent être montés solidaires sur un arbre pivotant par rapport au châssis ou bien chaque disque peut être monté indépendant pivotant par rapport à des paliers.

Les disques pénètrent le sol à leur périphérie et permettent ainsi de travailler la couche supérieure du sol. La forme de la périphérie du disque et la forme générale du disque sont adaptées au type de sol et au type de travail à réaliser. On a ainsi des disques plans, concaves, ondulés, etc. et dont la périphérie est soit circulaire, ou bien dentée, ou lobée, ou .... De tels disques sont alors principalement utilisés pour des travaux tels par exemple un labour, un déchaumage ou un semis.

Les disques connus de l'art antérieur présentent une partie centrale qui sert à leur fixation sur leur châssis et une partie périphérique qui est destinée à pénétrer le sol. Les disques sont réalisés le plus souvent dans un alliage d'acier. Cet acier subit un traitement thermique afin de le durcir de manière à limiter l'usure du disque, notamment au niveau de sa périphérie. La dureté du disque est toutefois limitée pour ne pas rendre le disque cassant et éviter des ruptures entre la partie centrale de fixation et la périphérie travaillant le sol. Ainsi, les disques connus de l'art antérieur présentent une dureté généralement comprise entre 49 et 53 HRc (degrés de dureté Rockwell), cette dureté étant homogène dans le disque. Une dureté de 49° HRC correspond environ à 1 600 MPa (ou 160 kg/mm²) et une dureté de 52° HRC correspondant à environ 1 750 MPa (ou 175 kg/mm²) (il n'existe pas de correspondance exacte entre les mesures de dureté dans le système international et les duretés Rockwell).

Le document US-4,305,272 révèle un disque à usage agricole qui présente un bord extérieur d'une plus grande dureté que la partie centrale du disque. Cette différence de dureté est obtenue par un traitement thermique différentiel au cours duquel une pièce annulaire conductrice de la chaleur est disposée à la périphérie du disque. Le procédé de réalisation décrit dans ce document est difficile à mettre en oeuvre industriellement et à la connaissance du Déposant, aucun disque tel que décrit dans ce document n'a été commercialisé. Il ne peut concerner que des disques en acier de faible épaisseur. En outre, le disque réalisé ne présente une dureté accrue qu'à sa périphérie.

La présente invention a pour but de fournir un disque qui, par rapport aux disques de l'art antérieur, s'use moins vite sans être toutefois plus cassant et présente des caractéristiques améliorées de manière à notamment allonger sa durée de vie. De préférence, la présente invention pourra être mise en oeuvre sur des disques d'épaisseur importante (au-delà de 4 mm par exemple).

A cet effet, la présente invention propose un disque métallique destiné notamment à un usage agricole, comportant une partie centrale ductile servant notamment à la fixation du disque à un châssis et une partie périphérique extérieure destinée notamment au travail du sol et présentant une dureté supérieure à celle de la partie centrale.

Selon la présente invention, le disque présente en outre une zone de transition, entre la partie centrale et la partie périphérique, qui présente un gradient de dureté dans une direction radiale et au moins dans la partie centrale, un gradient de dureté existe dans l'épaisseur du disque.

La partie périphérique de grande dureté permet d'augmenter la résistance à l'usure du disque. La partie centrale ductile et la zone de transition permettent quant à elles d'assurer une flexion suffisante au disque pour lui permettre de subir d'importantes contraintes sans casser. En outre, grâce au gradient de dureté dans l'épaisseur du disque au moins dans la partie centrale, il est possible d'avoir dans l'épaisseur du disque une dureté variable. Ainsi par exemple on peut avoir à mi-épaisseur du disque une zone de grande dureté et en surface une zone formant une peau ductile de dureté moindre. On peut aussi envisager par exemple qu'une face du disque présente une plus grande dureté que l'autre face du disque avec un gradient de dureté s'étendant d'une face à l'autre dans l'épaisseur de celui-ci.

Dans un disque selon l'invention, la différence de dureté entre la partie centrale et la partie périphérique est de préférence d'au moins 20 kg/mm². Cette différence de dureté entre la partie périphérique et la partie centrale du disque permet d'augmenter de façon sensible les performances du disque selon l'invention comparées à celles d'un disque similaire de dureté homogène.

Pour favoriser la résistance à l'usure, la dureté de la partie périphérique est avantageusement d'au moins 1 900 MPa (ou 190 kg/mm²). La dureté de la partie centrale est quant à elle avantageusement comprise entre 1 500 et 1 700 MPa (ou entre 150 et 170 kg/mm²) pour permettre une flexion suffisante du disque aux contraintes auxquelles il peut être soumis et une grande résistance à la fatigue et à la déformation.

Un disque selon l'invention peut être par exemple réalisé dans un alliage d'acier dopé au bore et contenant du manganèse, du chrome et du silicium. Un tel alliage permet, par traitement thermique, d'obtenir les duretés proposées plus haut. Cet alliage comprend avantageusement entre 0,35 et 0,42 % de carbone et/ou moins de 0,16 % de chrome.

Dans un disque selon l'invention, la variation de dureté dans l'épaisseur du disque dans une zone présentant un gradient de dureté dans l'épaisseur peut être comprise entre 2 et 15 kg/mm² par exemple. Ce gradient de dureté dans l'épaisseur du disque est avantageusement présent à la fois dans la partie centrale du disque et dans la zone de transition.

Dans une forme de réalisation, un disque selon l'invention présente une zone centrale plane utilisée pour sa fixation sur un châssis et entourée par une zone concave. Dans cette forme de réalisation, la partie centrale ductile s'étend avantageusement au-delà de la zone centrale plane. De cette manière, une zone ductile entoure la partie du disque destinée à être fixée à un châssis et à être solidaire de celui-ci.

La présente invention concerne toutes les tailles et toutes les formes de disques à usage agricole. Toutefois, la présente invention est plus particulièrement adaptée à des disques présentant un diamètre compris entre 400 et 1100 mm et/ou à des disques d'une épaisseur supérieure à 3 mm, de préférence supérieure à 4 mm.

La présente invention propose également un procédé de fabrication d'un disque tel que décrit ci-dessus, ce procédé comportant les étapes suivantes :
- réalisation d'une ébauche par découpe d'une tôle d'acier,
- réalisation d'une zone de fixation au centre de l'ébauche par poinçonnage,
- emboutissage éventuel de l'ébauche,
- traitement thermique de la pièce ainsi obtenue par opération de trempe à l'eau ou au polymère, et
- revenu à température variable, ce revenu pouvant par exemple être réalisé en utilisant des moyens de chauffage par induction.

Le revenu est réalisé en chauffant la pièce. Ce revenu est à température variable car on ne chauffe pas uniformément la pièce et la température atteinte varie d'une zone à l'autre de la pièce ainsi que dans l'épaisseur de la pièce. L'utilisation de moyens de chauffage par induction permet de maîtriser le chauffage et donc la température dans la pièce. On arrive de la sorte à réaliser des variations de dureté dans le disque obtenu par le procédé selon la présente invention.

Des détails et avantages de la présente invention ressortiront mieux de la description qui suit, faite en référence aux dessins schématiques annexés, sur lesquels :
La figure 1 est une vue de dessus d'une forme de réalisation d'un disque selon l'invention, et
La figure 2 est une vue en coupe selon la ligne de coupe II-II de la figure 1 du disque représenté.

Les dessins représentent un disque à usage agricole à fond plat selon l'invention. La forme extérieure de ce disque est identique à celle d'un disque à fond plat de l'art antérieur. Il s'agit d'un disque métallique se présentant sous la forme d'une calotte sphérique avec un fond plat 2. Ce dernier se trouve au centre de la calotte sphérique et présente un diamètre D. Il existe des disques à usage agricole présentant une forme différente de la forme représentée sur les dessins. La présente invention peut également concerner ces disques de formes différentes qui peuvent être utilisés notamment pour des labours, des semis et/ou des opérations de déchaumage.

Le fond plat 2 présente en son centre un alésage 4 destiné à la fixation de ce disque sur un châssis (non représenté). Le bord libre du disque, correspondant à la périphérie du disque, présente un biseau 6 utilisé pour le travail du sol afin de hacher par exemple des résidus de récoltes.

Dans la forme de réalisation représentée sur les dessins, le disque présente un axe de symétrie qui est ici également un axe de révolution 8. Entre le biseau 6 et le fond plat 2, le disque présente un rayon de courbure R et une épaisseur E. A titre purement indicatif, la valeur E peut varier entre 3,5 et 8 mm. La hauteur du disque est appelée F : elle est mesurée le long de l'axe de révolution 8.

Conformément à la présente invention, le disque représenté présente une dureté qui varie d'une part en fonction de la distance à l'axe de révolution 8 et d'autre part, comme expliqué ci-après, un gradient de dureté existe dans l'épaisseur E du disque dans certaines zones. On réalise alors tout d'abord un gradient de dureté radial (variation de la dureté par rapport à l'axe de révolution 8) et ensuite un gradient de dureté transversal -ou dans l'épaisseur du disque-.

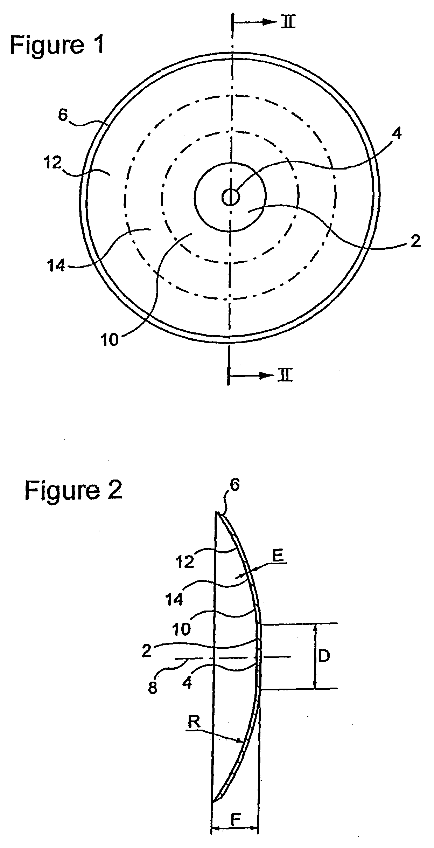

Ce disque présente ainsi selon le gradient de dureté radial deux parties de duretés distinctes et une zone de transition. On reconnaît ainsi sur la figure 1 une partie centrale 10 et une partie périphérique 12 séparées par la zone de transition 14. Des traits mixtes illustrent sur la figure 1 les séparations entre chacune des parties 10 et 12 et la zone de transition 14. Le gradient de dureté transversal concerne, dans le mode de réalisation décrit, la partie centrale 10 et la zone de transition 14.

La partie centrale 10 est une zone ductile et la partie périphérique 12 présente une dureté plus importante que la partie centrale 10. La zone de transition 14 présente quant à elle un gradient de dureté radial et un gradient de dureté transversal.

La partie centrale 10 sert notamment à la fixation du disque à un châssis. On remarque dans la forme de réalisation des dessins que cette partie centrale 10 s'étend au-delà du fond plat 2. Le diamètre de la partie centrale 10 est par exemple compris entre D+75 mm et D+120 mm.

La dureté de la partie centrale 10 est par exemple comprise entre 1 550 et 1 650 MPa (ou entre 155 kg/mm² et 165 kg/mm²) à la surface du disque. Cette dureté est sensiblement constante mais peut aussi légèrement évoluer éventuellement en croissant depuis son centre jusqu'à la zone de transition 14.

Dans cette partie centrale 10, la dureté varie dans l'épaisseur du disque. On peut par exemple avoir une dureté plus importante au coeur de l'épaisseur du disque et moins importante à la surface du disque. La variation de dureté entre le coeur de l'épaisseur du disque et la surface du disque est par exemple comprise entre 20 et 150 MPa (ou entre 2 et 15 kg/mm²), de préférence entre 30 et 80 MPa (ou entre 3 et 8 kg/mm²). Dans ce premier exemple, on a alors deux gradients de dureté : un depuis le coeur de l'épaisseur du disque vers chacune des surfaces du disque. Cette première variante est par exemple adaptée à un disque plat (ne présentant pas de concavité contrairement au disque montré sur les dessins) dont les deux faces peuvent être amenées à travailler en flexion.

Selon un autre exemple, la dureté varie d'une face à l'autre du disque : on a alors un seul gradient de dureté transversal d'une surface à l'autre du disque. Les variations de dureté d'une face à l'autre sont les mêmes que celles indiquées pour le premier exemple, c'est-à-dire qu'elles sont comprises entre 20 et 150 MPa (ou entre 2 et 15 kg/mm²), de préférence entre 30 et 80 MPa (ou entre 3 et 8 kg/mm²).

Les variations de dureté dans l'épaisseur du disque dépendent de la manière dont le disque doit travailler. La face du disque au niveau de la partie centrale qui subit l'effort de flexion maximum est la plus ductile-avec la valeur de dureté la moins élevée-. De même, c'est là où le disque travaille principalement en compression que l'on choisira d'avoir la dureté la plus élevée.

Dans la partie périphérique 12, la dureté est quant à elle par exemple comprise entre 2 000 et 2 100 MPa (ou entre 200 kg/mm² et 210 kg/mm²). Elle est de préférence maximale au niveau du biseau 6. La largeur de cette partie périphérique 12, qui est de forme annulaire, est généralement comprise entre 50 et 300 mm. La dureté ne varie pas, ou que très peu, dans l'épaisseur du disque au niveau de cette partie périphérique 12.

Dans la zone de transition 14, la dureté varie, par exemple sensiblement linéairement, depuis la valeur de la dureté à l'extérieur de la partie centrale 10 à la valeur de dureté à l'intérieur de la partie périphérique 12. Dans l'exemple numérique donné plus haut à titre d'exemple non limitatif, la dureté passe d'environ 1 600 MPa (ou 160 kg/mm²) à 2 000 MPa (ou 200 kg/mm²). Cette zone de transition présente par exemple une largeur de l'ordre de quelques centimètres, en fonction du diamètre extérieur du disque.

On retrouve dans cette zone de transition 14 un gradient de dureté transversal similaire à celui décrit pour la partie centrale 10. Si dans la partie centrale 10 la dureté est plus importante à coeur de l'épaisseur du disque, la dureté dans la zone de transition 14 sera aussi plus importante à coeur de l'épaisseur du disque. Si une face de la partie centrale 10 est plus dure que la face opposée, on retrouvera un gradient de dureté transversal similaire dans la zone de transition 14.

La plupart des disques connus de l'art antérieur présentent une dureté homogène. Celle-ci est en général de l'ordre de 1 600 MPa (ou 160 kg/mm²), ce qui correspond à environ 49° HRc. Par rapport à un tel disque de l'art antérieur, un disque selon la présente invention présente une très sensible amélioration à la fois de la résistance à l'usure et de la résistance aux sollicitations mécaniques (fatigue). Des essais réalisés ont permis de mesurer une résistance à l'usure et aux sollicitations mécaniques à chaque fois trois fois supérieure à la résistance d'un disque de mêmes dimensions de l'art antérieur.

Un disque selon l'invention est réalisé en acier. La concentration en carbone (C) est de préférence comprise entre 0,35 et 0,42 %. Cet acier est de préférence un acier dopé au bore comprenant en outre du manganèse, du chrome et du silicium. La teneur en chrome (Cr) est quant à elle avantageusement inférieure à 0,20 %, de préférence inférieure à 0,16 %.

Pour obtenir une dureté variable sur la surface du disque, il existe plusieurs procédés de fabrication. Un procédé préféré est décrit ci-après. Selon ce procédé, le disque est réalisé tout d'abord à partir d'un acier (tel que défini plus haut par exemple) se présentant sous forme d'une feuille ou à partir d'une bobine. Une première opération de découpe permet d'obtenir une ébauche. Par poinçonnage, l'élément de fixation central est formé. Cet élément permet la liaison avec un châssis. Par poinçonnage, l'alésage 4 est par exemple réalisé. D'autres formes de réalisation peuvent être ici envisagées. Au lieu d'un alésage central, plusieurs alésages peuvent être prévus. Ensuite, une ébauche de biseau est réalisée à la périphérie. Ici aussi, selon la forme du disque souhaitée, il est possible par exemple de réaliser des créneaux et/ou d'autres formes à la périphérie du disque. Un emboutissage, par exemple à chaud, permet de donner à l'ébauche une forme concave.

Enfin, un traitement thermique est réalisé. Ce traitement permet de donner la dureté au disque. Il s'agit ici d'une trempe à l'eau ou au polymère. La pièce obtenue est alors d'une grande dureté. Pour obtenir une partie centrale 10 ductile, un revenu est réalisé en adoptant la température de revenu en fonction de la zone du disque. Ce revenu permet alors d'obtenir une dureté moins importante au centre et dans la zone de transition 14 entre la partie centrale 10 et la partie périphérique 12 qui présente un gradient de dureté radial et éventuellement transversal. Pour obtenir ce résultat, on réalise un chauffage de la pièce en maîtrisant la température dans les diverses zones du disque. La partie centrale 10 sera ainsi plus chauffée que la partie périphérique 12. Cette dernière subit éventuellement aussi un revenu pour réaliser un détensionnement permettant de supprimer les contraintes de trempe. Une variation de dureté peut être éventuellement observée lors de cette opération de revenu au niveau de la zone périphérique 12.

En réalisant ce revenu à l'aide de moyens de chauffage par induction, il est possible de réaliser d'une part le gradient de dureté radial par positionnement adéquat des moyens de chauffage et en prévoyant éventuellement des moyens de refroidissement pour certaines zones et d'autre part le gradient de dureté transversal décrit plus haut en agissant par exemple sur la fréquence du courant utilisé.

Une forme de réalisation préférée du procédé selon l'invention prévoit un revenu de tout le disque mais on ne sortirait pas du cadre de l'invention en ne prévoyant qu'un revenu de la partie centrale 10 et éventuellement aussi de la zone de transition 14. Les moyens de chauffage par induction permettant de réaliser un revenu du disque à température variable avec une bonne maîtrise de la chauffe du disque tant en fonction de la position radiale considérée que dans l'épaisseur du disque. Cette maîtrise des zones de chauffage permet de piloter les variations de dureté dans le disque aussi bien en ce qui concerne le gradient de dureté radial que le gradient de dureté transversal.

Un disque selon l'invention présente ainsi sur sa périphérie une partie avec une grande dureté qui est donc très résistante à l'usure. Cette partie du disque est destinée à venir au contact du sol à travailler et vient heurter tout type d'objets se trouvant sur le sol, et notamment des pierres.

Au centre, le disque est fixé sur un châssis. Cette fixation est assimilée à un encastrement et il y a peu de contraintes mécaniques à l'intérieur de cette fixation. Les contraintes mécaniques, notamment de flexion, apparaissent dans la partie du disque située entre sa fixation et sa partie active se trouvant dans le sol. Grâce au gradient de dureté transversal réalisé dans la partie centrale (et éventuellement aussi dans la zone de transition), un disque selon l'invention présente aussi une meilleure résistance à la fatigue en flexion et aux amplitudes de déformation, c'est-à-dire en fixant le centre du disque et en appliquant de façon répétée une charge en flexion à la périphérie du disque. Pour des disques de dimensions similaires, un disque selon l'invention aura une résistance sensiblement supérieure (jusqu'à trois fois) qu'un disque de l'art antérieur présentant une dureté homogène.

La présente invention permet donc d'obtenir à la fois une plus grande dureté, un meilleure résistance à la fatigue et autorise une plus grande déformation du disque. Ces caractéristiques qui semblaient antagonistes jusqu'alors ont pu être obtenues sur un même disque grâce à la présente invention.

La présente invention présente aussi l'avantage de pouvoir s'adapter à tous les types de disques : disques plats, bombés, tronconiques, coutres circulaires plats ou présentant des ondulations. Le centre du disque peut être plat, bombé, embouti, .... La périphérie du disque peut être circulaire, dentée, crénelée, lobée, ....

L'invention peut s'adapter à toutes les dimensions de disques mais il apparaîtra à l'homme du métier qu'elle est plus avantageuse pour les disques de grands diamètres destinés à subir des contraintes plus importantes que pour des petits disques. L'invention est ainsi plus particulièrement, mais non pas exclusivement, adaptée à des disques dont le diamètre est supérieur à 40 ou 50 cm ainsi qu'à des disques dont l'épaisseur est supérieure à 3,5 ou 4 mm.

La présente invention ne se limite pas à la forme de réalisation préférentielle décrite ci-dessus à titre d'exemple non limitatif et au procédé de réalisation proposé. Elle concerne également toutes les variantes de réalisation à la portée de l'homme du métier, dans le cadre des revendications ci-après.

## Revendications

1. Disque métallique destiné notamment à un usage agricole, comportant une partie centrale (10) ductile servant notamment à la fixation du disque à un châssis, ou similaire, et une partie périphérique (12) extérieure destinée notamment au travail du sol et présentant une dureté supérieure à celle de la partie centrale (10), **caractérisé en ce que** le disque présente en outre une zone de transition (14), entre la partie centrale (10) et la partie périphérique (12), qui présente un gradient de dureté dans une direction radiale, et **en ce que**, au moins dans la partie centrale (10), un gradient de dureté existe dans l'épaisseur du disque.

2. Disque selon la revendication 1, **caractérisé en ce que** la différence de dureté entre la partie centrale (10) et la partie périphérique (12) est d'au moins 200 MPa (ou 20 kg/mm²).

3. Disque selon l'une des revendications 1 ou 2, **caractérisé en ce que** la dureté de la partie périphérique (12) est d'au moins 1 900 MPa (ou 190 kg/mm²).

4. Disque selon l'une des revendications 1 à 3, **caractérisé en ce que** la dureté de la partie centrale (10) est comprise entre 1 500 MPa et 1 700 MPa (ou entre 150 et 170 kg/mm²).

5. Disque selon l'une des revendications 1 à 4, **caractérisé en ce qu'**il est réalisé dans un alliage d'acier dopé au bore et contenant du manganèse, du chrome et du silicium et comprenant entre 0,35 et 0,42 % de carbone et moins de 0,16 % de chrome.

6. Disque selon l'une des revendications 1 à 5, **caractérisé en ce que** la variation de dureté dans l'épaisseur du disque dans une zone présentant un gradient de dureté dans l'épaisseur est comprise entre 20 et 150 MPa (ou entre 2 et 15 kg/mm²).

7. Disque selon l'une des revendications 1 à 6, **caractérisé en ce qu'**un gradient de dureté dans l'épaisseur du disque existe dans la partie centrale (10) du disque ainsi que dans la zone de transition (14).

8. Disque selon l'une des revendications 1 à 7, **caractérisé en ce qu'**il présente une zone centrale plane (2) utilisée pour sa fixation sur un châssis et entourée par une zone concave, et **en ce que** la partie centrale (10) ductile s'étend au-delà de la zone centrale plane (2).

9. Disque selon l'une des revendications 1 à 8, **caractérisé en ce qu'**il présente un diamètre compris entre 400 et 1100 mm.

## Patentansprüche

1. Metallscheibe, die insbesondere zum landwirtschaftlichen Gebrauch bestimmt ist, enthaltend einen verformbaren Mittelteil (10), der insbesondere zum Befestigen der Scheibe an einen Rahmen oder dergleichen dient, sowie einen äußeren Umfangsteil (12), der insbesondere zum Bearbeiten des Bodens bestimmt ist und eine Härte aufweist, die höher als die des Mittelteils (10) ist, **dadurch gekennzeichnet, dass** die Scheibe ferner zwischen dem Mittelteil (10) und dem Umfangsteil (12) einen Übergangsbereich (14) aufweist, der einen Härtegradienten in einer radialen Richtung aufweist, und dass zumindest in dem Mittelteil (10) ein Härtegradient in der Materialdicke der Scheibe besteht.

2. Scheibe nach Anspruch 1, **dadurch gekennzeichnet, dass** die Härtedifferenz zwischen dem Mittelteil (10) und dem Umfangsteil (12) zumindest 200 MPa (oder 20 kg/mm²) beträgt.

3. Scheibe nach einem der Ansprüche 1 oder 2, **dadurch gekennzeichnet, dass** die Härte des Umfangsteils (12) zumindest 1 900 MPa (oder 190 kg/mm²) beträgt.

4. Scheibe nach einem der Ansprüche 1 bis 3, **dadurch gekennzeichnet, dass** die Härte des Mittelteils (10) zwischen 1 500 MPa und 1 700 MPa (oder zwischen 150 und 170 kg/mm²) liegt.

5. Scheibe nach einem der Ansprüche 1 bis 4, **dadurch gekennzeichnet, dass** sie aus einer bor-dotierten und mangan-, chrom- und siliciumhaltigen Stahllegierung hergestellt ist und zwischen 0,35 und 0,42 % Kohlenstoff und zumindest 0,16 % Chrom enthält.

6. Scheibe nach einem der Ansprüche 1 bis 5, **dadurch gekennzeichnet, dass** die Härteänderung in der Materialdicke der Scheibe in einem Bereich einen Härtegradienten in der Materialdicke zwischen 20 und 150 MPa (oder zwischen 2 und 15 kg/mm²) aufweist.

7. Scheibe nach einem der Ansprüche 1 bis 6, **dadurch gekennzeichnet, dass** der Härtegradient in der Materialdicke der Scheibe in dem Mittelteil (10) der Scheibe sowie in dem Übergangsbereich (14) besteht.

8. Scheibe nach einem der Ansprüche 1 bis 7, **dadurch gekennzeichnet, dass** sie einen flachen Mittelbereich (2) aufweist, der zu deren Befestigung an einen Rahmen verwendet wird und von einem konkav verlaufenden Bereich umgeben ist, und dass der verformbare Mittelteil (10) sich über den flachen Mittelbereich (2) hinaus erstreckt.

9. Scheibe nach einem der Ansprüche 1 bis 8, **dadurch gekennzeichnet, dass** sie einen Durchmesser zwischen 400 und 1100 mm aufweist.

## Claims

1. Metal disk intended especially for agricultural use, comprising a ductile central portion (10) serving especially for fastening the disk to a frame, or the like, and an outer peripheral portion (12) intended especially for working the soil and having a hardness greater than that of the central portion (10), **characterized in that** the disk furthermore has a transition zone (14), between the central portion (10) and the peripheral portion (12), which has a hardness gradient in a radial direction and **in that**, at least in the central portion (10), a hardness gradient exists through the thickness of the disk.

2. Disk according to claim 1, **characterized in that** the difference in hardness between the central portion (10) and the peripheral portion (12) is at least 200 MPa (or 20 kg/mm²).

3. Disk according to either of claims 1 and 2, **characterized in that** the hardness of the peripheral portion (12) is at least 1900 MPa (or 190 kg/mm²).

4. Disk according to one of claims 1 to 3, **characterized in that** the hardness of the central portion (10) is between 1500 MPa and 1700 MPa (or between 150 and 170 kg/mm²).

5. Disk according to one of claims 1 to 4, **characterized in that** it is made of a boron-doped steel alloy containing manganese, chromium and silicon and comprising between 0.35 and 0.42% carbon and less than 0.16% chromium.

6. Disk according to one of claims 1 to 5, **characterized in that** the variation in hardness through the thickness of the disk in a zone having a hardness gradient through the thickness is between 20 and 150 MPa (or between 2 and 15 kg/mm²).

7. Disk according to one of claims 1 to 6, **characterized in that** there is a hardness gradient through the thickness of the disk in the central portion (10) of the disk and in the transition zone (14).

8. Disk according to one of claims 1 to 7, **characterized in that** it has a flat central zone (2), which is used for fastening it to a frame and is surrounded by a concave zone, and **in that** the ductile central portion (10) extends beyond the flat central zone (2).

9. Disk according to one of claims 1 to 8, **characterized in that** it has a diameter of between 400 and 1100 mm.
